# EUROPEAN PATENT APPLICATION

(11) **EP 2 746 941 A1**
(43) Date of publication of application: **25.06.2014**
(21) Application number: 12306644.1
(22) Date of filing: 20.12.2012
(51) Int. Cl.: G06F 9/50

(54) **Device and method for optimization of data processing in a MapReduce framework**

(71) Applicant: Thomson Licensing, 92130 Issy-les-Moulineaux (FR)
(72) Inventor: Le Scouarnec, Nicolas, 35576 Cesson Sévigné (FR); Le Merrer, Erwan, 35576 Cesson Sévigné (FR)
(74) Representative: Perrot, Sébastien

(57) **Abstract**

A map reduce frame work for large scale data processing is optimized by the method of the invention that can be implemented by a master node. The method comprises reception of data from worker nodes on read pointer locations pointing to input data of tasks executed by these worker nodes and stealing of work from these tasks, the work being stolen being applied to input data that have not yet been processed by the task from which work is stolen.

## Description

### 1. Field of invention.

The current invention relates to data processing in a MapReduce framework. The MapReduce model was developed at Google Inc. as a way to enable large-scale data processing.

### 2. Technical background.

MapReduce is a programming model for processing large data sets, and the name of an implementation of the model by Google. MapReduce is typically used to do distributed computing on clusters of computers. The model is inspired by the "map" and "reduce" functions commonly used in functional programming. MapReduce comprises a "Map" step wherein the master node establishes a division of a problem in map tasks that each handle a particular sub-problem and assigns these map tasks to worker nodes. This master task is also referred to as a "scheduling" task. For this, the master splits the problem input data and assigns each input data part to a map task. The worker nodes process the sub-problems, and notify the master node upon map task completion. MapReduce further comprises a "Reduce" step wherein the master node assigns a "reduce" operation to some worker nodes, which collect the answers to all the sub-problems and combine them in some way to form the output - the answer to the problem it was originally trying to solve.

MapReduce allows for distributed processing of the map and reduction operations. Provided each mapping operation is independent of the others, the maps can be performed in parallel. Similarly, a set of 'reducers' can perform the reduction phase. While this process can appear inefficient compared to algorithms that are more sequential, MapReduce can be applied to significantly larger datasets than "commodity" servers can handle - a large server farm can use MapReduce to sort a petabyte of data in only a few hours; MapReduce is typically suited for the handling of 'big data'. The parallelism also offers some possibility of recovering from partial failure of servers or storage during the operation: if one mapper or reducer fails, the work can be rescheduled - assuming the input data is still available. A popular open source implementation of MapReduce is Apache Hadoop. (source: Wikipedia).

MapReduce relies on "static" splitting of tasks to ease scheduling by the master and to increase fault tolerance. The static splitting in tasks is handled by the master node "scheduler" task. The word "static" means in this context that the task is split before the execution into smaller tasks of same size. A task being a combination of a program/function and input data, splitting tasks consists in splitting the input data in portions, and creating several tasks applying the program on the various split data portions.

Blumofe et al. describe in their paper "Scheduling Multithreaded Computations by Work Stealing" at FOCS 1994 (an Annual IEEE Symposium on Foundations of Computer Science) the benefits of work stealing in which processors steal work from other processors. This technique is well suited for dealing with heterogeneous tasks. However, it is limited to stealing work between dependent tasks, e.g. that are executed on a single machine with shared memory between threads. The technique cannot be applied to MapReduce since the MapReduce paradigm relies on the assumption that tasks are independent, which allows static splitting of input data to improve scaling and fault tolerance.

To deal with "stragglers" (i.e. machines that compute slowly and that reduce the performance of the data processing system), MapReduce comprises a mechanism that is known as "speculative execution', consisting in simultaneous execution of copies of a task, hoping that one of the tasks will be executed faster than others. This improvement allows for performance gains in an environment where heterogeneous resources are used. It is not suited to cope with task heterogeneity, i.e. some tasks may require more computational power than others.

Guo et al. of the Indiana University of Bloomington, USA, describe in their paper "Improving MapReduce Performance in Heterogenous Network Environments and Resource Utilisation" that in MapReduce, map and reduce tasks are assigned to map and reduce "slots" hosted by worker nodes. Each worker comprises a user-configurable number of map and reduce slots to which tasks are assigned. Portions of underlying resources are reserved for each slot. Resource usage is optimal when all slots are used simultaneously. However, collected usage data of a thousand-node Google production cluster shows that CPU utilization is far from optimal most of the time. The authors acknowledge that resource utilization in the MapReduce paradigm as applied in Hadoop is inefficient when there are not enough tasks to fill all task slots. Each worker node has a number of map and reduce slots that can be configured by users on a per-node basis. When there are not enough tasks to fill all task slots, reserved resources are wasted. In order to improve the MapReduce performance, Guo et al. propose resource stealing and enable running tasks to steal reserved "idle" resources for "speculative execution", i.e. parallel execution of a same task ("copy", or "competing" tasks), to deal with heterogeneity of execution devices; for each of a number of tasks T1 to Tn, tasks are re-executed (the previously mentioned "speculative execution") so that the total number of tasks becomes equal to the number of slots. The re-executing tasks use the resources reserved for "idle" slots.

These prior art efforts to improve processing speed remains limited through the above mentioned static splitting. A current approach in MapReduce is to tune parameters related to this static splitting in order to improve load balancing and finally the performance of the data processing. However, this strategy requires intervention of a skilled human because it requires a precise knowledge of the input data that is to be processed. Care must be taken that input data is not split in blocks that are too small in size, because adding map tasks increases the overhead that is required for each split task. Examples of overhead are: time to synchronize, time to transfer and start the task, to transmit a result, and to merge all results.

Yet another strategy for improving performance is what is referred to as "work stealing" as opposed to the "resource stealing" discussed by Guo. Al-Obaidi et al. discuss work stealing in their paper "A partial multi stealing scheduling model for divide and conquer problems", ICCCE 2012, 3-5 July 2012. However, the work stealing discussed by Al-Obaidi et al. targets multicore processor architectures, and discusses work stealing by stealing of a task thread to give it to an unused processor core. This work stealing strategy is designed for multi-threaded tasks and multicore processors and would not lead to a faster execution of a non-multi-threaded task or on single core nodes. Furthermore, the strategy is limited by a number of unused processor cores. Finally, Al-Obaidi et al. is similar to Blumofe et al. All these disadvantages make that these strategies are not optimal for application in a MapReduce model.

Prior art relates to the optimization of the execution of tasks, i.e. once the static dividing in tasks has been made. This is not optimal as the static dividing does not take into account the heterogeneity between different divided tasks and between different execution nodes. It would be advantageous to propose a MapReduce based method that dynamically adapts both to task and node heterogeneity.

There is thus a need for further optimization of prior art solutions.

### 3. Summary of the invention.

The present invention aims at alleviating some inconveniences of prior art.

To this end, the invention comprises a method for processing data in a map reduce framework, the method being executed by a master node and comprising a splitting of input data into input data segments; assigning tasks for processing the input data segments to worker nodes, where each worker node is assigned a task for processing an input data segment; determining, from data received from worker nodes executing the tasks, if a read pointer that points to a current read location in an input data segment processed by a task has not yet reached a predetermined threshold before input data segment end; and assigning of a new task to a free worker node, the new task being attributed a portion, referred to as split portion, of the input data segment that has not yet been processed by the task that has not yet reached a predetermined threshold before input data segment end, the split portion being a part of the input data segment that is located after the current read pointer location.

According to a variant embodiment of the invention, the last step of the method is subordinated to a step of determining, from the data received from the tasks, of an input data processing speed per task, and for each task of which a data processing speed is below a data processing speed threshold, execution of the last step of Claim 1, the data processing speed being determined from subsequent read pointers obtained from the data received from the worker nodes.

According to a variant embodiment of the invention, the method further comprises a step of transmission of a message to worker nodes executing a task that has not yet reached the predetermined threshold before input data segment end, the message containing information for updating an input data segment end for a task executed by a worker node to which the message is transmitted.

According to a variant embodiment of the invention, the method further comprises a step of inserting of an End Of File marker in an input data stream that is provided to a task for limiting processing of input data to a portion of an input data segment that is located before the split portion.

According to a variant embodiment of the invention, the method further comprises an updating of a scheduling table in the master node, the scheduling table comprising information allowing a relation of a worker node to a task assigned to it and defining an input data segment portion start and end of the task assigned to it.

According to a variant embodiment of the invention, the method further comprises a speculative execution of tasks that process non-overlapping portions of input data segments.

The current invention also applies to a master device for processing data in a map reduce framework, the device comprising means for splitting of input data into input data segments; means for assigning tasks for processing the input data segments to worker nodes, where each worker node is assigned a task for processing an input data segment; means for determining, from data received from worker nodes executing the tasks, if a read pointer that points to a current read location in an input data segment processed by a task has not yet reached a predetermined threshold before input data segment end; and means for assigning of a new task to a free worker node, the new task being attributed a portion, referred to as split portion, of the input data segment that has not yet been processed by the task that has not yet reached a predetermined threshold before input data segment end, the split portion being a part of the input data segment that is located after the current read pointer location.

According to a variant embodiment of the device according to the invention, the device further comprises means for determining, from the data received from the tasks, of an input data processing speed per task, and means to determine if a data processing speed is below a data processing speed threshold, the data processing speed being determined from subsequent read pointers obtained from the data received from the worker nodes.

According to a variant embodiment of the device according to the invention, the device further comprises means for transmission of a message to worker nodes executing a task that has not yet reached the predetermined threshold before input data segment end, the message containing information for updating an input data segment end for a task executed by a worker node to which the message is transmitted.

According to a variant embodiment of the device according to the invention, the device further comprises means for inserting of an End Of File marker in an input data stream that is provided to a task for limiting processing of input data to a portion of an input data segment that is located before the split portion.

According to a variant embodiment of the device according to the invention, the device further comprises means for updating of a scheduling table in the master node, the scheduling table comprising information allowing a relation of a worker node to a task assigned to it and defining an input data segment portion start and end of the task assigned to it.

According to a variant embodiment of the device according to the invention, the device further comprises means for a speculative execution of tasks that process non-overlapping portions of input data segments.

### 4. List of figures.

More advantages of the invention will appear through the description of particular, non-restricting embodiments of the invention. The embodiments will be described with reference to the following figures:
Figure 1 is a block diagram showing the principles of a prior art MapReduce method.
Figure 2 is a block diagram of a prior art large-scale data processing system for data processing according to the MapReduce paradigm.
Figure 3 is a flow chart of prior-art method of data processing according to the MapReduce method.
Figure 4 is a detail of the flow chart of figure 3, illustrating the mapping task that is done by the master node.
Figure 5 is a block diagram that represents workers processing input data.
Figure 6 is a flow chart of the mapping task according to a non-limited variant embodiment of the invention.
Figure 7 is a block diagram illustrating the splitting of input data files according to a non-limited embodiment of the invention.
Figure 8 is a block diagram of a non-limiting example embodiment of a device according to the invention.
Figure 9 is a sequence chart that illustrates a non-limited variant embodiment of the method according to the invention.
Figure 10 is a flow chart of the method of the invention according to a non-limiting example embodiment.

To facilitate understanding, identical reference numerals are used where possible to designate identical elements that are common to the figures.

### 5. Detailed description of the invention.

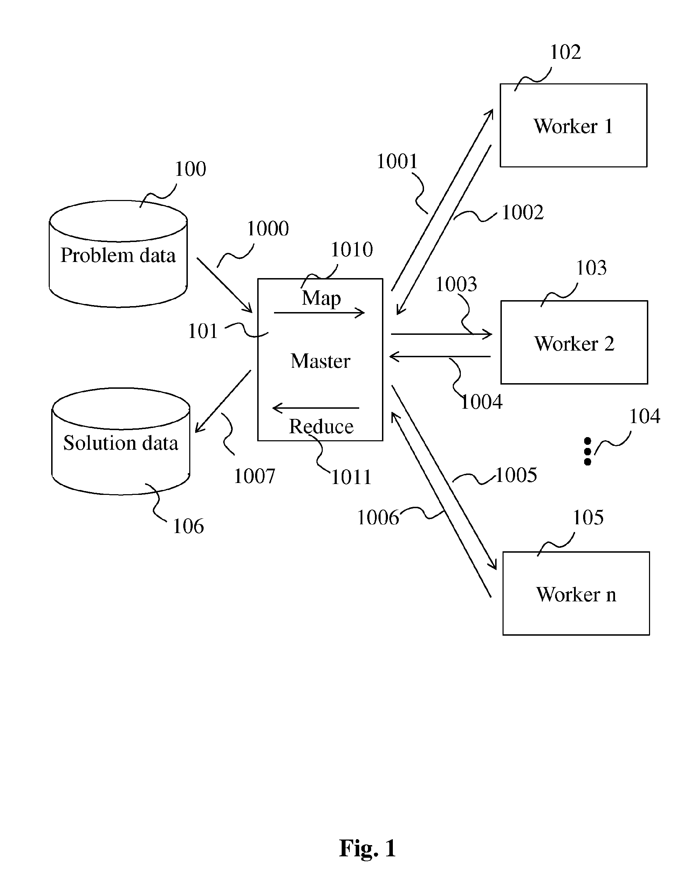

**Figure 1** is a block diagram showing the principles of a prior art MapReduce method (source: Wikipedia).

A "master" node 101 takes (via arrow 1000) input data ("problem data") 100, and in a "map" step 1010, divides it into smaller sub-problems, that are distributed over "worker" nodes 102 to 105 (arrows 1001,1003, 1005). The worker nodes process the smaller problem (arrows 1002, 1004, 1006) and notify the master node of task completion. In a "reduce" step 1011, the master node assigns a "reduce" operation to some worker nodes, which collect the answers to all the sub-problems and combine them in some way to form the output ("solution data") 106 (via arrow 1007).

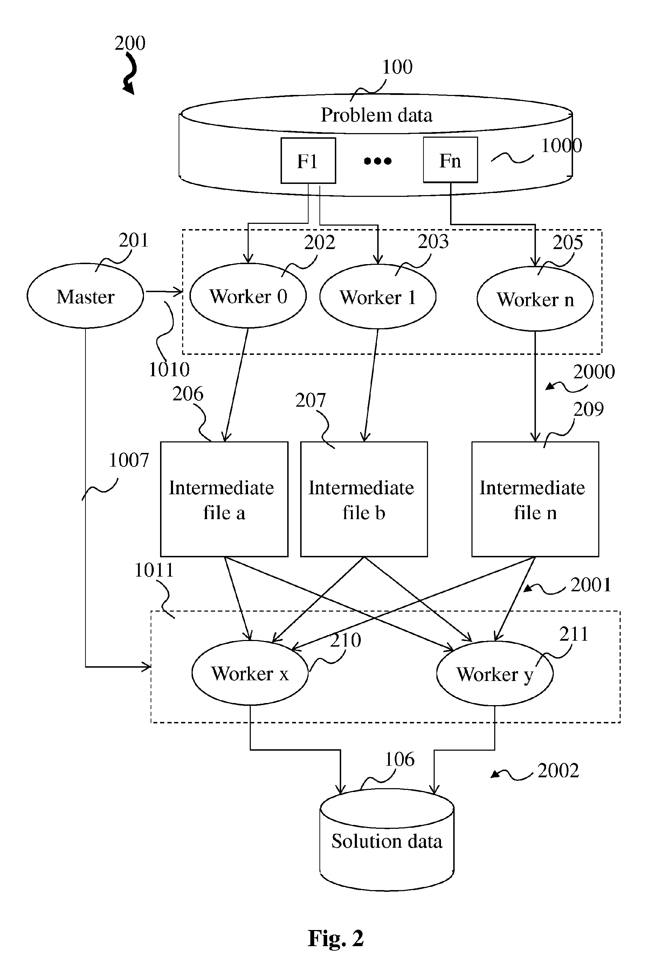

**Figure 2** is a block diagram of a prior art large-scale data processing system according to the MapReduce paradigm. The elements that are in common with figure 1 have already been explained for that figure and are not explained again here. A master process 201 splits problem data 100, stored in files F1 to Fn (1000) that it attributes to tasks that it assigns to worker nodes 202-205. The master process is also responsible for assigning reduce tasks to worker nodes (like worker nodes 210 and 211). The nodes 202-205 produce intermediate data values 2000, which are collected and written to intermediate files a (206), b (207) to n (209). When the master is notified of the intermediate results being obtained, the master assigns reduce tasks to worker nodes 210 to 211. These processes retrieve input data (2001) from the intermediate files 206-209, merge and combine the data and store (2002) the resulting solution data 106. An example of a typical problem that is suited to be handled by MapReduce, is counting of gender and average age of clients of a shopping website. Input data 100 is then a consumer purchase data base of the shopping website. The web site having a huge commercial success, its client data base is huge - several terabytes of data. The data is stored in files F1-Fn. The master process splits each file in segments of 64 Mbytes. With a list of worker nodes, the master establishes a scheduling table, that attributes each segment of input data to a task and to a worker node. According to our scenario, the tasks that are to be executed by the worker nodes are two: calculating of number of male/female buyers and calculating of the average age of the buyers. Each worker node 202 to 205 stores its intermediate result in one of the intermediate files 206 to 209. For example, intermediate file "a" 206 comprises the number of female clients and average age of clients from a first segment of file F1, whereas intermediate file "b" 207 comprises the number of female clients and average age of the second segment of file F1, whereas intermediate file "n" comprises the number of female clients and client average age calculated over the nth segment of file "n". As the master is notified of the workers 202-205 having finished their tasks, he assigns reduce tasks to worker nodes, such as workers 210 and 211. These workers execute the reduce tasks, reading the contents of the intermediate files "a" to "n", to produce two result outputs, i.e. number of female clients and average client age, which is stored in solution data 106.

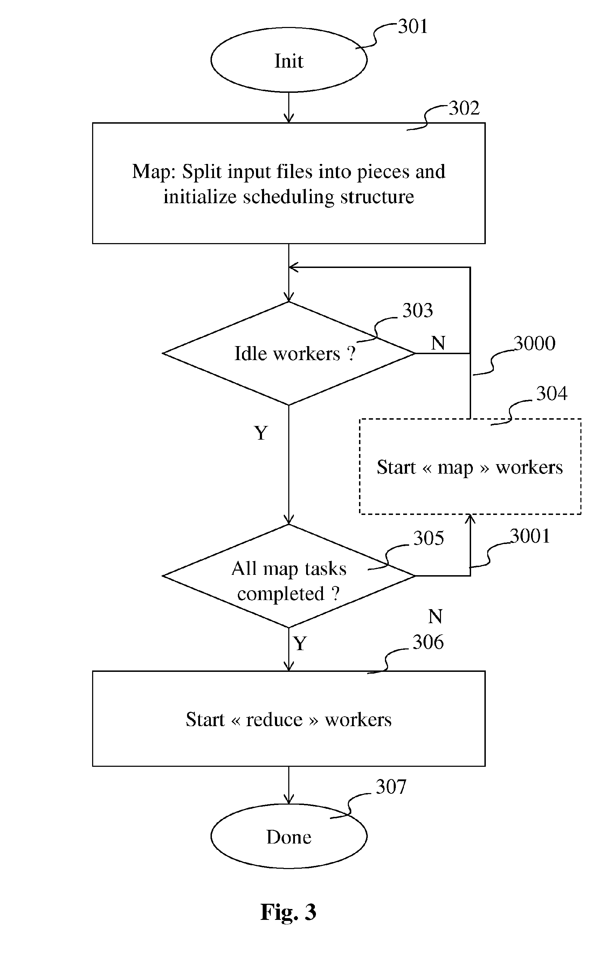

**Figure 3** is a flow chart diagram of a master process.

In an initialization step 301, variables and parameters are initialized that are needed for the process. In a step 302, the master node splits the input files into segments of typically several tens of megabytes (for example, 16 or 64Mbyte), an option that is controllable by user via an optional parameter. Then, in a step 303, the master verifies if there are idle workers. The step loops if there are none. If there are idle (or "free") workers, the master verifies in a step 305 if there are still map tasks to be done for the idle workers; if so, the master instructs the idle workers to start these map tasks (arrow 3001 and step 304), and then returns to step 303 via arrow 3000. If there are no more map tasks to be done, reduce tasks are started in a step 306. If these are done, the process finishes with a step 307.

Table 1 hereunder gives an example of a prior art master node task scheduling table that is kept by the master.

**Table 1: master node map task scheduling table**

| **Task** | **File** | **Start** | **End** | **Assigned worker nodes** |
|---|---|---|---|---|
| M1 | F1 | 0 | 16 | W1, W5 |
| M2 | F1 | 0 | 16 | W2 |
| M1 | F2 | 16 | 32 | W3 |
| M2 | F2 | 16 | 32 | W4, W6 |

Map task M1 corresponds for example to calculation of the average client age of clients in a client data base. Map task M2 corresponds for example to calculation of the number of female clients. Worker W1 is to execute task M1 and must take an input data segment from file F1, from bytes 0 to 16Mbyte. Worker W2 is to execute task M2 from the same file, same segment. Worker W3 is to execute task M1 with as input data from file F2, segment 16 to 32Mbyte. W4 is to execute task M2 with the same input data as worker W3. Worker W5 is to execute a copy of task M1 that is executed by worker W1, i.e. for speculative execution. Worker W6 speculatively executes the same task as is executed by W4.

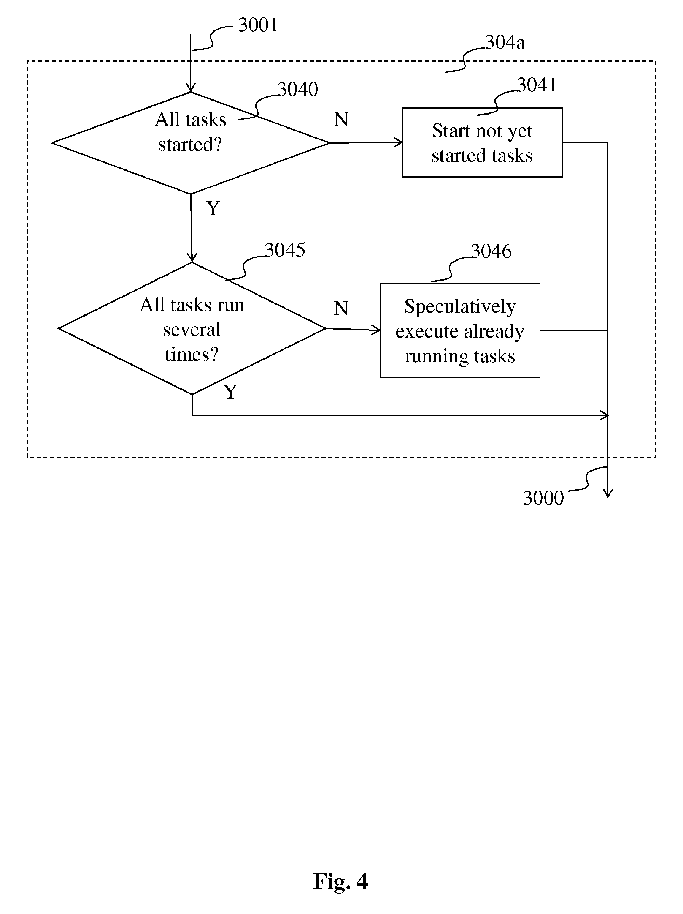

**Figure 4** is a flow chart diagram of a prior-art implementation of step 304 of figure 3. Step 304a represents a step wherein map tasks are started. The input of step 304a is arrow 3001, coming from step 305. The output is arrow 3000, towards the input of step 303.

In a step 3040, it is verified if all tasks have been started. If this is not the case, not yet started tasks are started in a step 3041, and step 304a returns to step 303. If all tasks have been started, it is verified if the tasks have been started several times in a step 3045 (i.e. speculative execution). If not, tasks that have not yet been speculatively executed and that have not yet finished are started simultaneously on idle worker nodes, i.e. these tasks are speculatively executed in a step 3046 (the notion of speculative execution has been discussed previously), thereby increasing the probability that time is gained; and step 304a continues to step 303. If, in step 3045 it is verified that all tasks have been speculatively executed several times, step 304a continues with step 303.

Starting of a task on a worker is done by the master that instructs a worker to fetch the task (i.e. the function/program to execute) and its input data. For example, referring back to Table 1, the master instructs worker node W1 to execute map task M1, and to take its input data from file F1, segment 0 to 16Mbyte; the process is identical for the other map tasks.

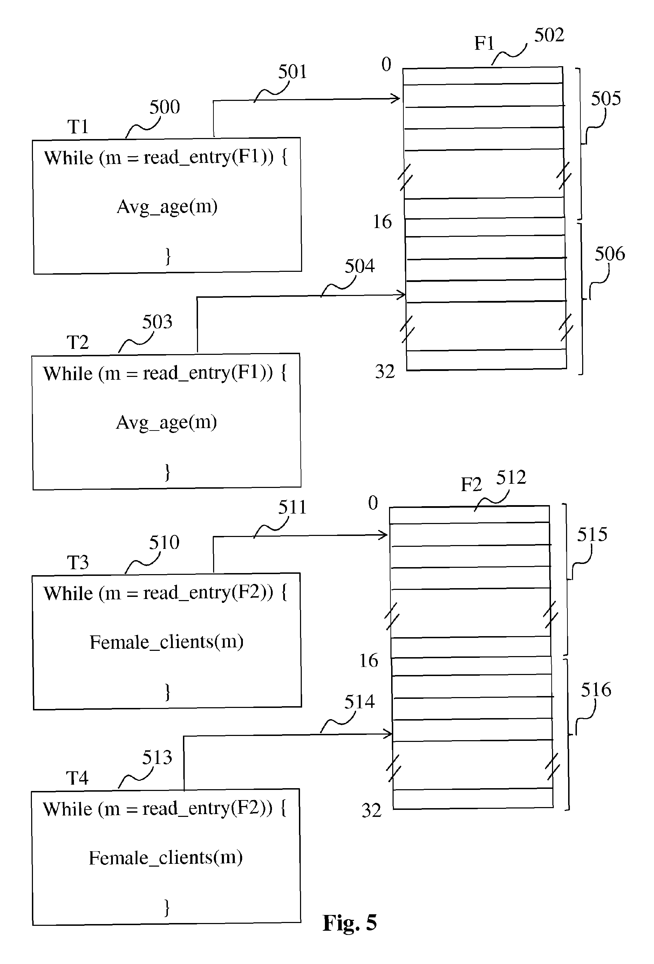

**Figure 5** is a block diagram that represents tasks running on workers processing input data. In particular, it represents tasks T1 (500), T2 (503), T3 (510), and T4 (513), running on worker nodes W1, W2, W3 and 4 respectively (the distribution of one task per worker node is not meant to be limitative but is a mere example; a worker node can execute multiple tasks according to its configuration and performance) and files F1 (502) and F2 (512) that comprise segments 505, 506 respectively 515 and 516. Inside the blocks 500, 503, 510 and 513 that represent the tasks, is shown a process that reads input lines from a file at the emplacement of the read pointer and that executes a program/function (e.g. 'avg_age', or 'female_clients') to which is passed the input line that is read. Arrows 501, 504, 511 and 514 represent read pointers. The program/function "read_entry" reads the input data file until the segment end ; for example, T1 from 0 until segment end at 16Mbyte, and T2 from 16 to 32 Mbyte.

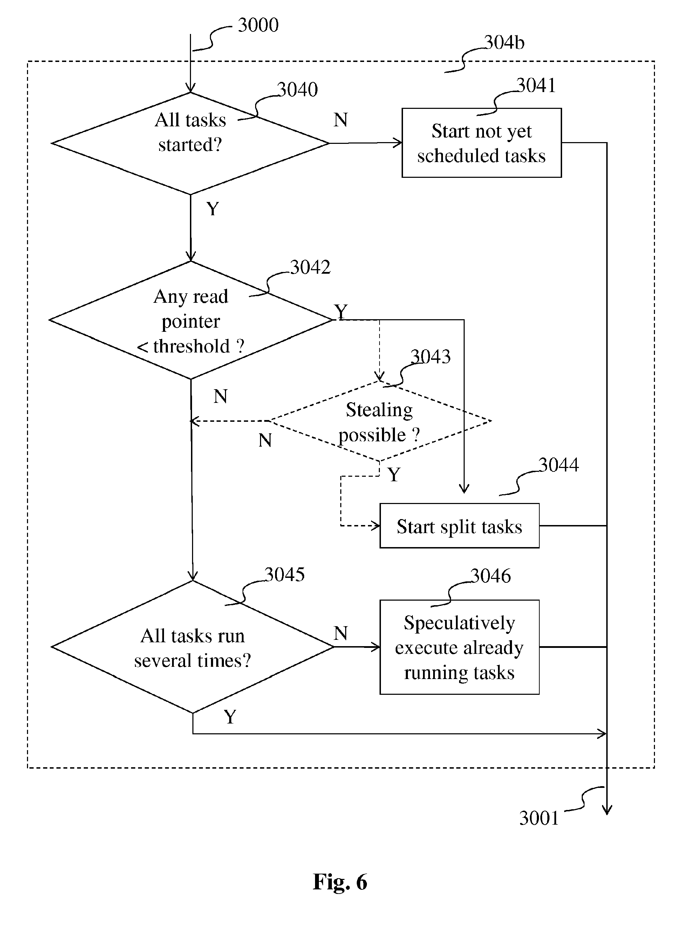

**Figure 6** is a flow chart of a step 304 of figure 3 according to an alternative embodiment, that illustrates a particular non-limiting embodiment of the invention.

The elements that are in common with the preceding figures have already been explained for those figures and their explanation is therefore not repeated here.

As has been discussed in the background section, the prior art relates to the optimization of the execution of tasks, i.e. once the static dividing in tasks has been made. This is not optimal as the static dividing does not take into account the heterogeneity between different divided tasks and between different worker nodes, i.e. a task may be more complex than another; a worker node may be slower than another.

Therefore, step 304b comprises additional steps of dynamic work stealing when possible. If it has been verified in step 3040 that all tasks have been started, it is determined in a step 3042 if there are any tasks that have a read pointer that is still before a predetermined threshold from the input data segment end, the input data segment can be further split, i.e. input data from the input data file can be transferred to another worker, i.e. 'stolen'. The predetermined amount is for example a user configurable parameter, that is for example set to 1 Mbyte. This determination in step 3042 can be done by verifying a read pointer of a task, or the workers regularly transmit a read pointer notification for each task that is being executed by the worker to the master to keep it updated. According to the previous example, in step 3042 it is determined if for example the input data read pointer 501 of task M1 that is executed by worker W1 is still before a threshold of 15Mbyte. If there are no tasks with read pointers that are still before the predetermined threshold from the input data segment end, step 3042 continues with step 3045. If however there are such tasks, step 3044 is executed, where a new ("copy") task is created and the new task is assigned to a idle worker and started, the new task having as input data part of the input data segment of the 'original' task (i.e. the task from which the new "copy" tasks were created) that has not yet been processed by the original task. Then, step 3044 continues with step 303 (via arrow 3001). In a variant embodiment, a decisional step 3043 is inserted between step 3042 and step 3044, where it is determined if stealing is possible, i.e. the worker that is determined in step 3042 is interrogated explicitly by the master to obtain its task(s) read pointer value(s). Possibly, such interrogation requires the worker to pause its task(s). This variant has the advantage, that it avoids the decision of step 3042 being based on a read pointer value that is no longer accurate.

If work is stolen from a task, the master updates its scheduling table. See for example Table 2 hereunder. The adaptations to the scheduling table as represented in Table 1 are marked in *italic,* underlined print.

| **Task** | **File** | **Start** | **End** | **Assigned worker nodes** |
|---|---|---|---|---|
| M1 | F1 | 0 | 10 | W1, W5 |
| *M1'* | *F1* | *10* | *16* | *W7* |
| M2 | F1 | 0 | 16 | W2 |
| M1 | F2 | 16 | 32 | W3 |
| M2 | F2 | 16 | 32 | W4,W6 |

As can be seen, task M1 is split into a task M1 and M1'. The end of input data file for task M1 is modified to be set to 10Mbyte, and a new "split" task M1' is created, running on a worker W7 that has as input file 1 with a segment starting at 10Mbyte and ending at 16Mbyte.

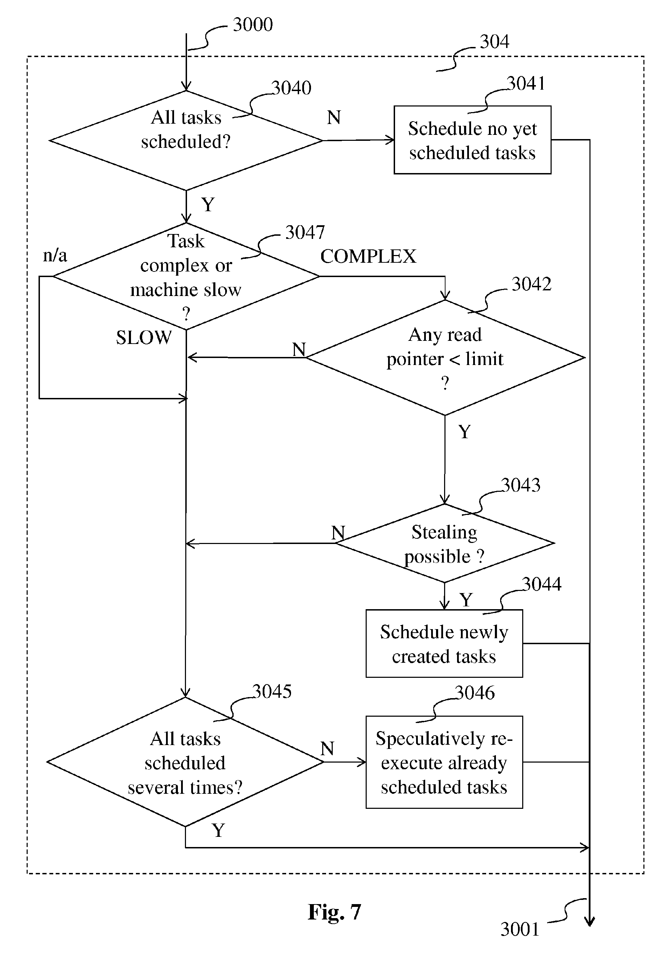

**Figure 7** is a flow chart of a further variant embodiment of the invention. The elements that are in common with the previous figures are not re-explained here.

If it has been verified in step 3040 that all tasks have been started, it is determined in a step 3047 if there are tasks that are either complex or being executed on slow workers, i.e. if there are "straggler" tasks. This can be determined by the master based on statistics collected by the master from the workers. Based on these statistics, the input data processing speed can be inferred by verifying the amount of data read over time by the tasks as they process each input file sequentially. The input data processing speed is can be obtained from subsequent read pointer values and is for example a bit rate, expressed in Kbytes/s. It can be determined if the input data processing speed is below a threshold. As an example, such threshold can be determined from the average processing speed plus a predetermined tolerance. Based on this information, if the input file processing speed is roughly the same for most tasks but some are significantly slower than the others, it is likely that the worker nodes on which the slow tasks are being executed are slow and speculative execution seems in that case the best solution, thereby continuing with step 3045. If a same task is speculatively executed on different nodes and input data processing speed for the speculatively executed task still remains below the previously mentioned threshold, the task is probably more complex than the average task and work stealing is very likely to help, thereby continuing with step 3042. If all tasks run with great variance in input data processing speed while the execution environment is similar, (e.g. same hardware, same load, ..), work stealing is again likely to help and step 3047 continues with step 3042. If the input data processing speed is roughly the same for all tasks, i.e. there are neither tasks that are more complex or nodes that are more slower than others, step 3047 continues with step 3045 (i.e. via the exit of step 3047 marked with 'n/a' (for "non-applicable") in figure 7) to apply a default strategy of speculative execution in absence of clear evidence that work stealing would help better than speculative execution. The goal is to adopt the strategy that is most adapted to the situation on hand, i.e. that is most likely to speed up overall task processing. According to a variant embodiment, the default strategy is to apply work stealing. The default strategy can be specified by a user configurable parameter setting.

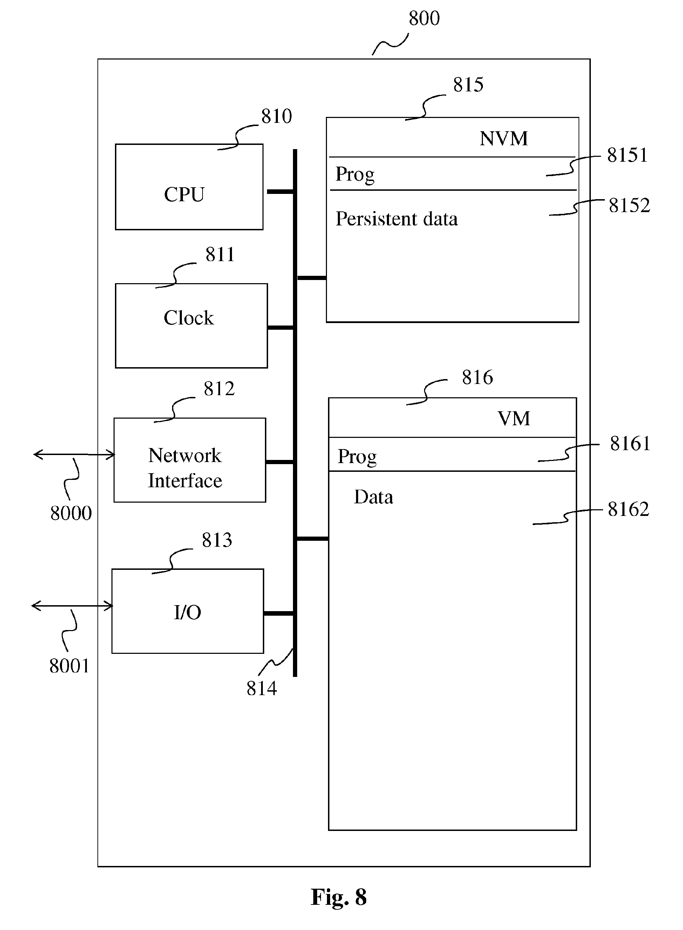

**Figure 8** is a block diagram of a non-limited example embodiment of a master node device according to the invention. The device comprises a CPU or Central Processing Unit or processor 810, a clock unit 811, a network interface 812, an I/O interface 813, a non volatile memory 815, and a volatile memory 816. All these elements are interconnected by a data or communication bus 814. The device can be connected to a communication network via connection 8000, and to external input/output devices (e.g. keyboard, screen, external data storage) via connection 8001. CPU 810 is capable of executing computer-readable instructions such as instructions that implement the method of the invention. Non volatile memory 815 stores a copy of the computer readable instructions in a memory zone 8151. Non volatile memory 815 further stores persistent data in a memory zone 8152, such as variables and parameters that need to be saved in a persistent way, to be used to return the device to a known state when it restarts from a power outage. Volatile memory 816 comprises a memory zone 8161, which comprises a copy of the computer readable instructions stored in memory zone 8151 of non volatile memory 815, which instructions are copied into memory zone 8161 upon startup of the device. Volatile memory 816 further comprises a memory zone 8162, used for temporary, non persistent data storage, for example for variables that are used during the execution of the computer readable instructions stored in memory zone 8161. Clock unit 811 provides a clock signal that is used by the different elements 810 and 812 to 816 for timing and synchronization.

The device 800 comprises means (CPU 810) for splitting of input data into input data segments; means (CPU 810) for assigning tasks for processing the input data segments to worker nodes, where each worker node is assigned a task for processing an input data segment; means (CPU 810) for determining, from data received from worker nodes executing the tasks, if a read pointer that points to a current read location in an input data segment processed by a task has not yet reached a predetermined threshold before input data segment end; and means (CPU 810) for assigning of a new task to a free worker node, the new task being attributed a portion, referred to as split portion, of the input data segment that has not yet been processed by the task that has not yet reached a predetermined threshold before input data segment end, the split portion being a part of the input data segment that is located after the current read pointer location.

According to a variant implementation of the device, the device 800 further comprises means (CPU 810) for determining, from the data received from the tasks, of an input data processing speed per task, and means (CPU 810) to determine if a data processing speed is below a data processing speed threshold, the data processing speed being determined from subsequent read pointers obtained from the data received from the worker nodes.

According to a variant implementation of the device, the device 800 further comprises means (Network interface 812) for transmission of a message to worker nodes executing a task that has not yet reached the predetermined threshold before input data segment end, the message containing information for updating an input data segment end for a task executed by a worker node to which the message is transmitted.

According to a variant implementation of the device, the device 800 further comprises means (CPU 810) for inserting of an End Of File marker in an input data stream that is provided to a task for limiting processing of input data to a portion of an input data segment that is located before the split portion.

According to a variant implementation of the device, the device 800 further comprises means (CPU 810) for updating of a scheduling table in the master node, the scheduling table comprising information allowing a relation of a worker node to a task assigned to it and defining an input data segment portion start and end of the task assigned to it.

According to a variant implementation of the device, the device 800 further comprises means (CPU 810) for a speculative execution of tasks that process non-overlapping portions of input data segments.

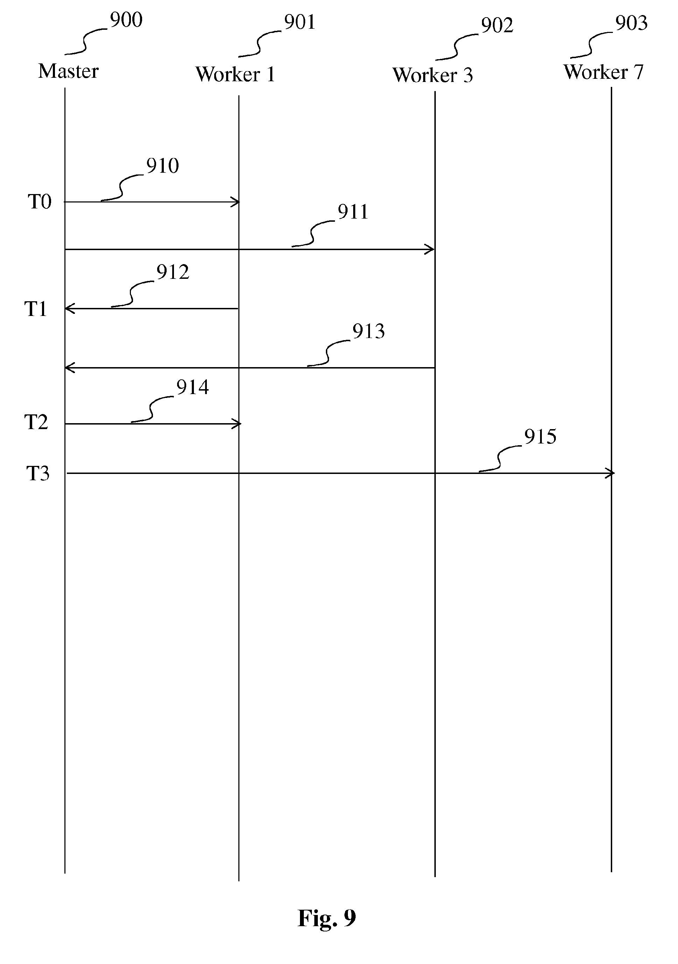

**Figure 9** is a sequence chart that illustrates a non-limited variant embodiment of the method according to the invention. Vertical lines 900, 901, 902 and 903 represent respectively a master node, worker node W1, worker node W3, and worker node W7. Arrows 910 to 915 represent messages that are exchanged between the nodes. T0-T3 represent different moments in time. At T0, the master node's map task scheduling table is as represented in table 1. At T0, the read pointers of the tasks executed by worker nodes W1 901 and W3 902 are retrieved by sending messages 910 and 911 to these nodes. Such messages comprise for example a request to transmit the position of an input data read pointer of a task. According to a variant embodiment, the request pauses the execution of the map task that is executed so that the master is ensured that the read pointer will not evolve as it will decide if a new task should be created, for example during step 3042-3044 depicted in figure 6 or during steps 3042 to 3044 and including step 3047 depicted in figure 7. At T1, data is received from task M1 running on W1 (arrow 912) and from task M1 running on worker node W3 (arrow 913), from which the master node can determine the read pointer of these tasks running on these workers, the read pointers pointing to positions in the respective input data segments that are input data for these tasks. The master node determines if the read pointers are a predetermined threshold (for example, 1Mbyte) before the respective input data segment ends. According to the depicted scenario and in coherence with table 1, this is the case for task M1 executed by W1, and the master updates entries in the map task scheduling table, resulting in table 2 (the term "updating" comprises the creation of new entries as well as modifying existing entries). At T2, the master transmits a message 914 to W1, indicating that the map task M1 is to be resumed and informing W1 that the input data segment end of task M1 is updated (previously 16Mbyte, now updated to 10Mbyte). At T3, the master transmits a message (arrow 915) to free (or "idle") W7 (903), indicating that a new task M1' is attributed to it, informing it that its input data is file F1, segment 10 to 16Mbyte, i.e. a second portion of the input data that is not yet processed by task M1 running on W1. Steps 3042-3044 depicted in figure 6 or during steps 3042 to 3044 and including step 3047 depicted in figure 7 can be repeated until the predetermined threshold is reached, i.e. new tasks can be created that work on different portions of the input data; for example, if the read pointer of worker node 7 still evolves slowly and thus the input file data processing speed of the task M1' is below a threshold; then, a new task M1" may be created that is to be executed on a free worker node, that has as input data a portion of the segment that is assigned to W7 and that has not yet been processed by that node.

According to a variant embodiment, a worker node that is candidate for a creation of a new map task because its input data processing speed is lower than that of other tasks (straggler task), is left unchanged, but new tasks are created that each process parts of the input data that is processed by the task that is left unchanged. An example is illustrated with the help of Table 3 hereunder:

**Table 3: straggler task left unchanged but competing tasks created**

| **Task** | **File** | **Start** | **End** | **Assigned worker nodes** |
|---|---|---|---|---|
| M1 | F1 | 0 | 16 | W2 |
| M1' | F1 | 0 | 8 | W1 |
| M1" | F1 | 8 | 16 | W3 |

Considering for example that task M1 is a straggler task, M1 is left unchanged but two more copy (or "competing") tasks are created, M1' and M1", each handling a portion of the input data that is handled by M1. A task (copy or original) that completes before others cancels the execution of other tasks, depending on the input data that they handle, thereby avoiding a waste of resources. For example, if W2 completes first, W1 and W3 are cancelled. If W3 completes first, W2 is cancelled. Thus, if a task is completed, and same tasks exist (meaning that they execute the same program/function) that have input data that overlaps with the completed task (i.e. "overlapping" tasks), then the overlapping tasks are cancelled. This strategy is thus a combination of work stealing and speculative execution and combines the advantages of both, i.e. speculative execution of tasks that process non-overlapping portions of input data segments. There are multiple reasons to leave a task that is being executed unchanged while in the same time using free resources in the hope that the task input data processing can be sped up. One of the reasons is that though a task's input data processing speed is slow at a given moment, its input data processing speed was sufficient in the past, and there is good reason to expect that the input data processing speed will improve. Another reason is for example that the worker did not reply within a certain delay to the request of the master to transmit input data read pointer position of the tasks that it is executing. Yet another reason is that the task is considered to be critical and must not be interrupted. Yet another reason is that the task M1 was executed speculatively on W2 and W1; and when stealing has been performed, only W1 was informed of the new end of the segment, hence leaving W2 unchanged with an overlap with W3.

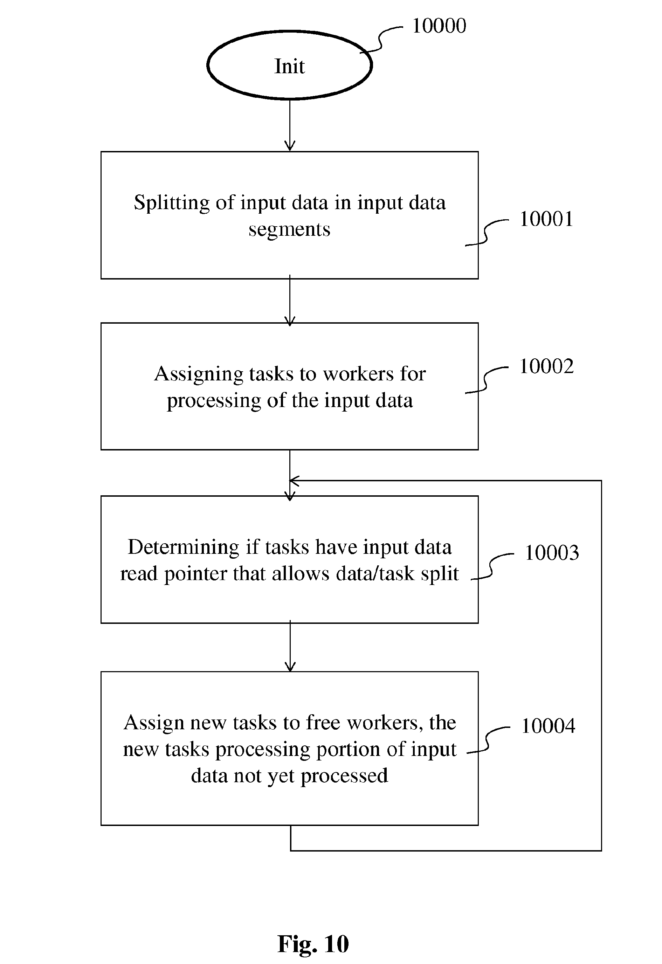

**Figure 10** is a logical diagram of the method of the invention according to a non-limiting example embodiment.

In a first step 10000, variables and parameters are initialized that are used for the method. In a step 10001, input data is split into input data segments. In a step 10002, tasks for processing the input data segments are assigned to worker nodes, where each worker node is assigned a task for processing an input data segment. In a step 10003, it is determined from data received from worker nodes (901, 902, 903) executing the tasks, if a read pointer that points to a current read location in an input data segment processed by a task has not yet reached a predetermined threshold before input data segment end; and in a step 10004, a new task is assigned to a free worker node, the new task being attributed a portion, referred to as split portion, of the input data segment that has not yet been processed by the task that has not yet reached a predetermined threshold before input data segment end, the split portion being a part of the input data segment that is located after the current read pointer location. The method loops back to step 10003 to find more tasks to split or and as free worker nodes become available.

The implementation of the invention is not limited to the embodiments shown. The reader will understand that figure 8 is a non-limiting example embodiment of a master device (or master "node") implementing the present invention. Notably, a device implementing the invention can comprise more or less elements than depicted, such as for example less elements that implement multiple functions, or more elements that implement more elementary functions.

Likewise, the reader will understand that the implementation of the method or the invention is not restricted to an implementation as depicted in the diagrams, and that the steps of the methods can be executed in a different order, or in parallel, for example to gain processing time.

The discussed variants can be used apart, or combined between them to provide particularly advantageous variant embodiments of the invention.

Although some of the described embodiments discuss a use of hardware elements, some functions that are presented as being implemented by hardware may instead be implemented in software to reduce production costs of a device implementing the present invention.

Alternatively, the invention is implemented using a mix of hard-and software components, where dedicated hardware components provide functions that are alternatively executed in software. According to a particular embodiment, the invention is entirely implemented in hardware, for example as a dedicated component (for example as an ASIC, FPGA or VLSI) (respectively « Application Specific Integrated Circuit », « Field-Programmable Gate Array» and « Very Large Scale Integration ») or as distinct electronic components integrated in a device or in a form of a mix of hardware and software.

## Claims

1. A method for processing data in a map reduce framework, the method being executed by a master node (800, 900) and comprising:
splitting (10001) of input data into input data segments;
assigning (10002) tasks for processing said input data segments to worker nodes, where each worker node is assigned a task for processing an input data segment;
**characterized in that** the method further comprises:
determining (10003), from data received from worker nodes (901, 902, 903) executing said tasks, if a read pointer that points to a current read location in an input data segment processed by a task has not yet reached a predetermined threshold before input data segment end; and
assigning (10004) of a new task to a free worker node, the new task being attributed a portion, referred to as split portion, of the input data segment that has not yet been processed by said task that has not yet reached a predetermined threshold before input data segment end, said split portion being a part of said input data segment that is located after said current read pointer location.

2. The method according to Claim 1, wherein the last step of the method of Claim 1 is subordinated to a step of determining (3047), from said data received from said tasks, of an input data processing speed per task, and for each task of which a data processing speed is below a data processing speed threshold, execution of the last step of Claim 1, said data processing speed being determined from subsequent read pointers obtained from said data received from said worker nodes.

3. The method according to Claim 1 or 2, comprising a step of transmission of a message to worker nodes executing a task that has not yet reached said predetermined threshold before input data segment end, the message containing information for updating an input data segment end for a task executed by a worker node to which the message is transmitted.

4. The method according to Claim 1 or 2, comprising inserting of an End Of File marker in an input data stream that is provided to a task for limiting processing of input data to a portion of an input data segment that is located before said split portion.

5. The method according to any of Claims 1 to 4, comprising an updating of a scheduling table in said master node, said scheduling table comprising information allowing a relation of a worker node to a task assigned to it and defining an input data segment portion start and end of said task assigned to it.

6. The method according to any of Claims 1 to 5, wherein said method comprises a speculative execution of tasks that process non-overlapping portions of input data segments.

7. A master device for processing data in a map reduce framework, said device comprising:
means for splitting of input data into input data segments;
means for assigning tasks for processing said input data segments to worker nodes, where each worker node is assigned a task for processing an input data segment;
**characterized in that** the device further comprises:
means for determining, from data received from worker nodes executing said tasks, if a read pointer that points to a current read location in an input data segment processed by a task has not yet reached a predetermined threshold before input data segment end; and
means for assigning of a new task to a free worker node, the new task being attributed a portion, referred to as split portion, of the input data segment that has not yet been processed by said task that has not yet reached a predetermined threshold before input data segment end, said split portion being a part of said input data segment that is located after said current read pointer location.

8. The device according to Claim 7, wherein the device further comprises means for determining, from said data received from said tasks, of an input data processing speed per task, and means to determine if a data processing speed is below a data processing speed threshold, said data processing speed being determined from subsequent read pointers obtained from said data received from said worker nodes.

9. The device according to Claim 7 or 8, comprising means for transmission of a message to worker nodes executing a task that has not yet reached said predetermined threshold before input data segment end, the message containing information for updating an input data segment end for a task executed by a worker node to which the message is transmitted.

10. The device according to Claim 7 or 8, comprising means for inserting of an End Of File marker in an input data stream that is provided to a task for limiting processing of input data to a portion of an input data segment that is located before said split portion.

11. The device according to any of Claims 7 to 10, comprising means for updating of a scheduling table in said master node, said scheduling table comprising information allowing a relation of a worker node to a task assigned to it and defining an input data segment portion start and end of said task assigned to it.

12. The device according to any of Claims 7 to 11, wherein said device comprises means for a speculative execution of tasks that process non-overlapping portions of input data segments.
